# EUROPEAN PATENT SPECIFICATION

(11) **EP 2 374 699 B1**
(45) Date of publication and mention of the grant of the patent: **07.05.2014**
(21) Application number: 11160529.1
(22) Date of filing: 30.03.2011
(51) Int. Cl.: B62D 53/04, B62D 53/06, B62D 53/08

(54) **Reconfigurable mobile semi-trailer combination and method of reconfiguring such a combination**
Umarrangierbare Sattelschlepper Kombination und Verfahren zum Umarrangieren solcher Kombination
Arrangement de semi-remorque reconfigurable et procédé pour reconfigurer un tel arrangement

(30) Priority: 30.03.2010 NL 2004479; 06.08.2010 NL 2005201
(43) Date of publication of application: 12.10.2011
(73) Proprietor: CoCo B.V., 9724 AK Groningen (NL)
(72) Inventor: Hofma, Gerrit Frits, 9724 AK, Groningen (NL)
(74) Representative: Janssen, Paulus J. P.

(56) References cited:
- EP-A1- 1 177 971
- EP-A2- 1 876 088
- FR-A- 1 522 677
- US-A- 3 163 306
- US-A- 3 374 010
- US-A- 4 740 007
- US-A- 4 856 804

## Description

### FIELD AND BACKGROUND OF THE INVENTION

The invention relates to a mobile semi-trailer combination and to a method for reconfiguring such a mobile trailer combination. For road transport of goods various types of combinations are known, such as a rigid vehicle towing a trailer or a semi-trailer, an articulated vehicle towing a trailer, an articulated vehicle towing a semi-trailer also known as a "B-double", or an articulated vehicle towing a semi-trailer resting on a dolly (sometimes referred to as a "road train"). For all these combinations regulations are in place with respect to safety and dimensions of the vehicle.

In the European Union, the maximum length for goods vehicles is set by EC directive 96/53/EC and is limited to 16.5 m for articulated vehicles and 18.75 m for full-trailer combinations. The directive does not set an absolute weight limit, but specifies certain limits which, if met, guarantee free circulation of vehicles within the EU. The harmonised maximum weight for international transport is 40 tonnes. The cargo capacity of combinations for container transport can also be expressed in TEU (Twenty- feet Equivalence Unit) which stands for the equivalent of a standard 20 ft long container.

For domestic transport some countries inside and outside the EU, e.g. the Netherlands, permit longer and heavier goods vehicles with more than one articulation, or are considering such permission. For example, vehicles weighing up to 60 tonnes and up to 25.25 m long, which can accommodate three TEU, are allowed in some EU countries. In the Netherlands, the Directorate of the office for road traffic has issued a rule of policy for an exemption on the restrictions allowing such Longer and Heavier Goods Vehicles (LHV).

However, such exemptions are typically applicable to particular roads only. This complicates the logistics and planning of transportation involving the use of LHVs and limits advantages of the use LHVs.

US 3163306 discloses a mobile semi-trailer according to the preamble of claim 1.

FR 2004 550 A discloses a trailer having a moving bolster at the rear end to accomodate containers of various sizes.

### SUMMARY OF THE INVENTION

It is an object of the present invention to provide a mobile semi-trailer combination of which the length is adaptable to different maximum lengths allowed on different roads.

According to the invention, this object is achieved by providing a mobile semi-trailer combination according to claim 1. The invention can also be used in a semi-trailer having a compact frame of adjustable length. The invention can further be embodied in a method for reconfiguring a mobile semi-trailer combination according to claim 10.

Such a mobile semi-trailer combination can be configured as a long semi-trailer combination as well as a short semi-trailer combination with a length shorter than the length of the long semi-trailer combination. The length of the vehicle can be changed to a large extent, so that for example reconfiguration between an LHV and a vehicle within the constraints of normal commercial vehicles or reconfiguration between a three TEU and a two TEU configuration can be achieved. This allows a more flexible use of the semi-trailer combination, for example as an LHV with three TEU until a first point of delivery and then as a conventional vehicle with two TEU load capacity to one or more further points of delivery, without being restricted to roads on which LHVs are allowed.

Particular elaborations and embodiments of the invention are set forth in the dependent claims.

Further features, effects and details of the invention appear from the detailed description and the drawings which are of schematic nature.

### BRIEF DESCRIPTION OF THE DRAWINGS

Fig. 1 is a side view of an embodiment of a mobile semi-trailer combination according to the invention in a long (LHV) configuration;
Fig. 2 is a side view of a front semi-trailer of the mobile semi-trailer combination of Fig. 1;
Fig. 3 is a side view of a rear semi-trailer of the mobile semi-trailer combination of Fig. 1 adjusted to its shortest length;
Fig. 4 is a top view of the rear semi-trailer of Fig. 3 in a long configuration;
Fig. 5 is a top view of the rear semi-trailer in the configuration shown in Fig. 3;
Fig. 6 is a top view of the front semi-trailer of Fig. 2 and a front portion of the rear semi-trailer of Figs. 3-5;
Fig. 7 is a side view of the mobile semi-trailer combination of Fig. 1 in a short configuration;
Fig. 8 is a side view of the mobile semi-trailer combination of Figs. 1 and 7 with the rear semi-trailer in its longest configuration;
Fig. 9 is a side view of the mobile semi-trailer combination of Fig. 8 with the front end of the rear semi-trailer slid into the front semi-trailer;]
Fig. 10 is a side view of another mobile semi-trailer combination according to the invention carrying three containers;
Fig. 11 is a side view of yet another mobile semi-trailer combination according to the invention in a long configuration carrying three containers;
Fig. 12 is a side view of the semi-trailer of Fig. 11 in different long configuration;
Fig. 13 is a side view of the semi-trailer of Fig. 11 in a short configuration carrying two containers;
Fig. 14 is a top view of a third semi-trailer of the mobile semi-trailer combination of Figs. 11-13;
Fig. 15 is a side view of a front end portion of the semi-trailer of Fig. 14;
Fig. 16 is a top view of a second semi-trailer of the mobile semi-trailer combination of Figs. 11-13;
Fig. 17 is a schematic cross-sectional view along the line XVII-XVII in Fig. 16;
Fig. 18 is a schematic cross-sectional view along the line XVIII-XVIII in Fig. 16;
Fig. 19 is a schematic top view of the first and second semi-trailer of the mobile semi-trailer combination of Figs. 11-13;
Fig. 20 is a cross-sectional view along the line XX-XX in Fig. 19.
Fig. 21 is a cross-sectional view along the line XXI-XXI in Fig. 2,
Fig. 22 is a top view of an alternative for the rear semi-trailer of the mobile semi-trailer combination of Figs. 1 and 7-9;
Fig. 23 is a schematic cross-sectional view along the line XXIII-XXIII in Fig. 22; and
Fig. 24 is a cross-sectional rear view of a portion of an alternative for the second semi-trailer of the mobile semi-trailer combination of Figs. 11-13.

### DETAILED DESCRIPTION

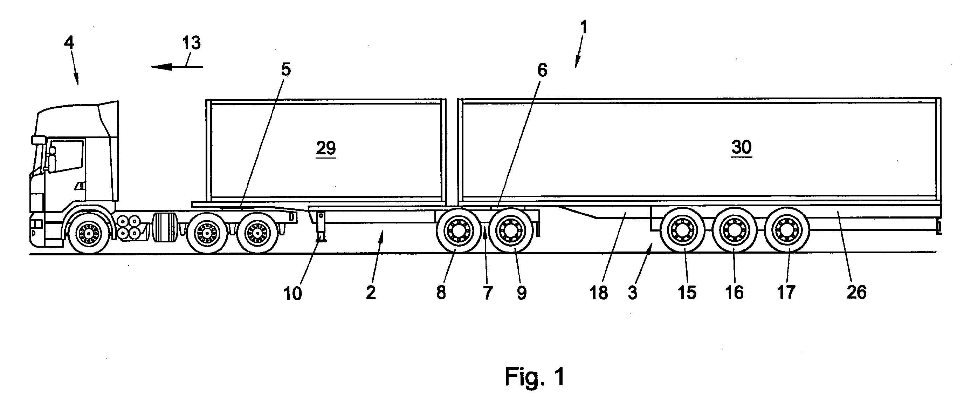

A mobile semi-trailer combination 1 composed of a front semi-trailer 2 and a rear semi-trailer 3 is towed by a tractor 4 (Fig. 1). The front semi-trailer 2 is connected to the tractor 4 by a front coupling 5 of the kingpin-plate type. The rear semi-trailer 3 is connected to the front semi-trailer 2 by a rear coupling 6 also of the kingpin-plate type. The front semi-trailer 2 carries a 20 ft container 29 and the rear semi-trailer carries a 40 ft container 30.

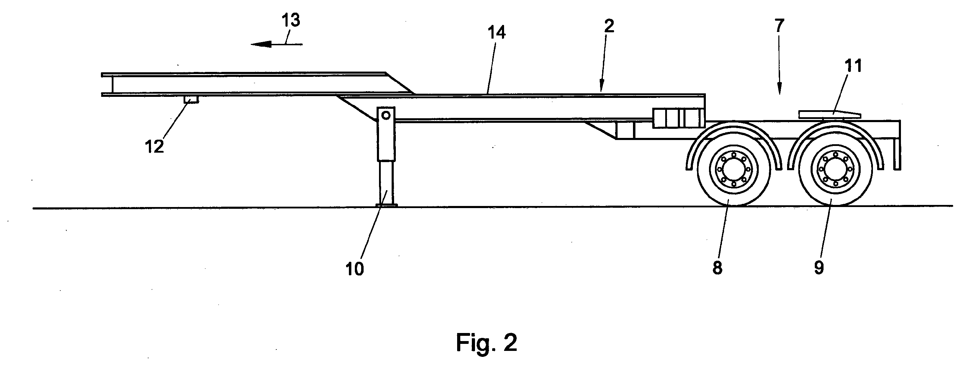

The front semi-trailer 2 (shown in more detail in Figs. 2, 6 and 21) has a support frame 14 for carrying the container 29, a coupling chassis and an extendable ground support member 10 for supporting the front end of the front semi-trailer 2 when it is parked. A coupling chassis 7 at the rear of the front semi-trailer 2 has two wheel axes with wheels 8, 9. A plate 11 of the rear kingpin-plate coupling 6 is mounted on the coupling chassis 7. A kingpin 12 of the front kingpin-plate coupling 5 is mounted at the front of the front semi-trailer 2 under the support frame 14. In this embodiment, the coupling chassis 7 is displaceable back and forth in a driving direction 13 with respect to the support frame 14 between different positions (see Figs. 1 and 6-10).

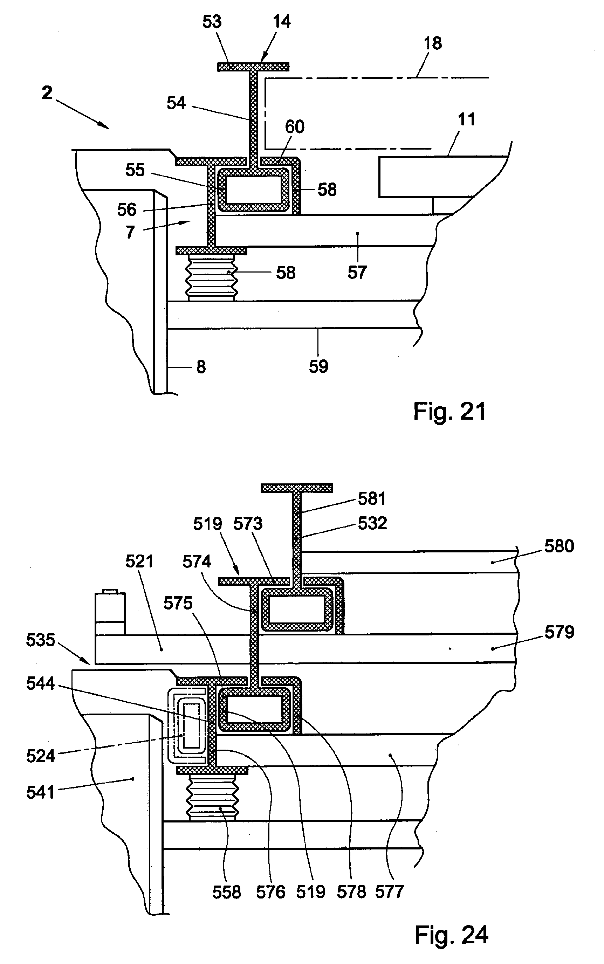

An example of a guide structure for allowing the displacement of the coupling chassis 7 relative to the support frame 14 is shown in Fig. 21. In this example, the support frame 14 has longitudinal beams 53 composed of a T-portion 54 and a box portion 55. The box portion 55 is slidably guided by a top corner portion of a beam 56, top surfaces of transverse beams 57 and guide flanges 58 projecting upwardly from the transverse beams 57. Such an arrangement provides a direct transfer of loads from the beams 53 of the support frame 14 to the coupling chassis 7 suspended by the wheels 8 and suspension members 58, 59. Furthermore, such an arrangement is light because only the guide flanges 58 constitute additional parts for the guiding function and the arrangement is compact since the beams 53 of the support frame 14 are partially nested in corners of the beams 56 of the coupling chassis 7. These advantages can also be achieved in a semi-trailer or a semitrailer combination without pivotable, retractable, demountable or slidable container support means as described below.

By providing that the guide flanges 58 have a horizontal portion 60 extending from the top of a vertical portion of that flange 58 towards the one of the beams 53 of the support frame 14 guided by that flange 58, a U-shaped guide surface is obtained within which a front frame portion 18 of the rear semi-trailer 3 can be guided.

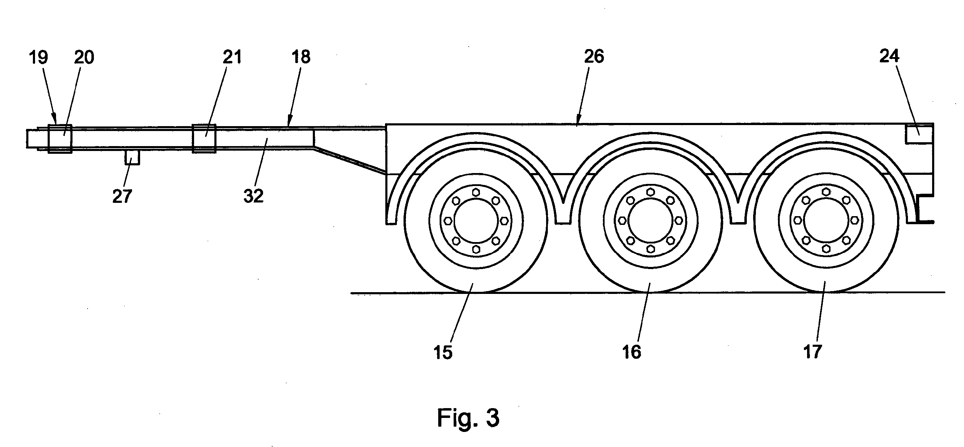

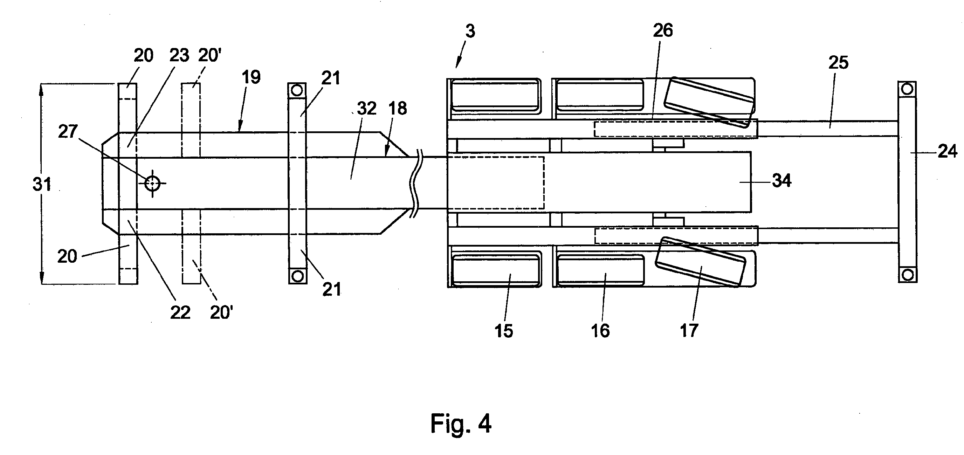

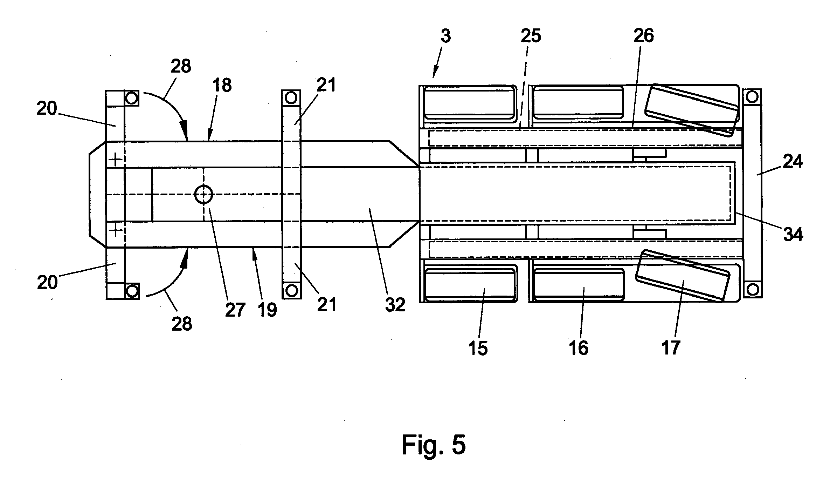

As is shown in Figs. 3 - 5, the rear semi-trailer 3 has a main frame 26 and three wheel axles 15-17. A front frame portion 18 of the rear semi-trailer 3 extends forwardly of the first wheel axle 15 and the main frame 26 in a direction of traffic 13. The front frame portion 18 has a front frame coupling member 27 complementary with the coupling member 27 of the coupling chassis 7. The front frame portion 18 is guided in longitudinal direction of the semi-trailer 3 in a guide 34 of the main frame 26 between an extended position (Fig. 4) and a position wherein the front frame portion 18 is partially retracted (Fig. 5). Thus, the distance over which the front frame portion 18 projects from the main frame 26, and accordingly the distance from the coupling member 27 to the main frame 26, is adjustable. In the present example, the guide 34 is in the form of a single box girder 34, which provides a better stiffness to weight relationship than for instance a guide constituted by two laterally and/or upwardly of downwardly open girders. Preferably, the coupling member 11 of the coupling chassis 7 is of the same type as the front coupling member 27 at the front of the front semi-trailer 3 and so that the rear semi-trailer 3 can also be coupled to the truck 4 by means of the front frame coupling member 27. The front frame coupling 27 is mounted to a central coupling carrier portion 32 of the front frame portion 18.

The front frame portion 18 is further provided with a container support frame 19 having container support arms 20, 21 extending laterally beside the front frame portion 18 in support positions. The container support arms 20, 21 are part of the container support frame portion 19 of which the position is adjustable in driving direction along coupling carrier portion 32. Accordingly, also the position of the front frame coupling 27 relative to the container support arms 20, 21 is adjustable in driving direction. In this embodiment the most forwardly located ones of the container support arms 20 are inwardly pivotable as indicated by arrows 28 in Fig. 5, about hinges 22, 23, allowing the pivotable support arms 20 to be accommodated within front frame portion 18. In the extended position the container support arms 20 span a width 31 nominally equal to the width of the support frame 14 of the front semi-trailer 2, so that both can carry containers of the same (standardized) width. The container support arms 21 are fixed end portions of a single support beam. A further container support beam 24 is located at the rear of the rear semi-trailer 3. The container support beam 24 at the rear is mounted on a slideable rear frame portion 25 allowing to adjust the length of the rear semi-trailer 3 (see Figs. 4, 5). In the present example, the rear frame portion 25 has two parallel beams in longitudinal direction. Alternatively, such a retractable rear frame portion may also be of a different construction, for instance having a single central beam extending in longitudinal direction. Such a beam may for instance be arranged to slide telescopically in or around a central beam of the front frame, such as the coupling carrier portion 32, so that when the front and rear frame portions are both extended, one still projects into the other over a small distance to keep the inner one of the beams positioned at its proximal end.

The slidable rear frame portion 25 and front frame portion 18 allow adjustment of the length of the rear semi-trailer 3. The length of the rear semi-trailer 3 may for instance be capable of being adjusted for carrying one container of 40 feet or 45 feet, two containers of 20 feet each or one container of 20 feet. Depending on the container length and the desired vehicle confirmation, either the fixed support arms 21 or the pivotable front support arms 20 may support the front end of the container. Besides containers, the semi-trailers can also be loaded with so called swap bodies, cradles or other cargo carriers.

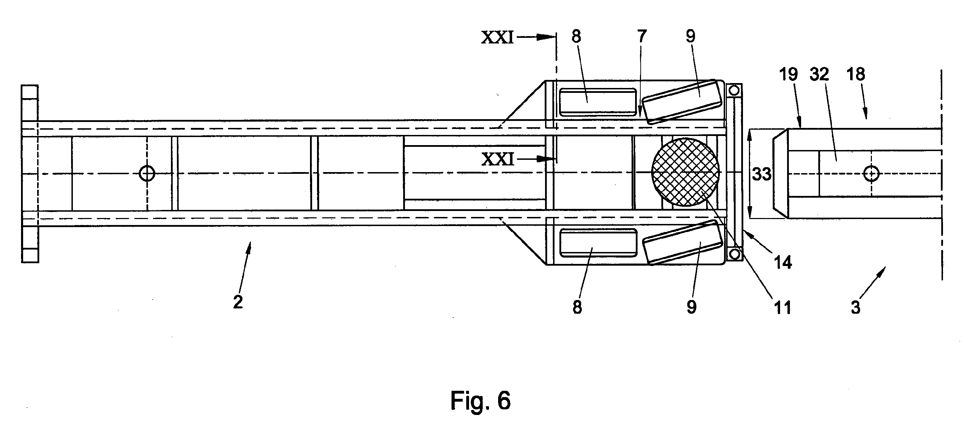

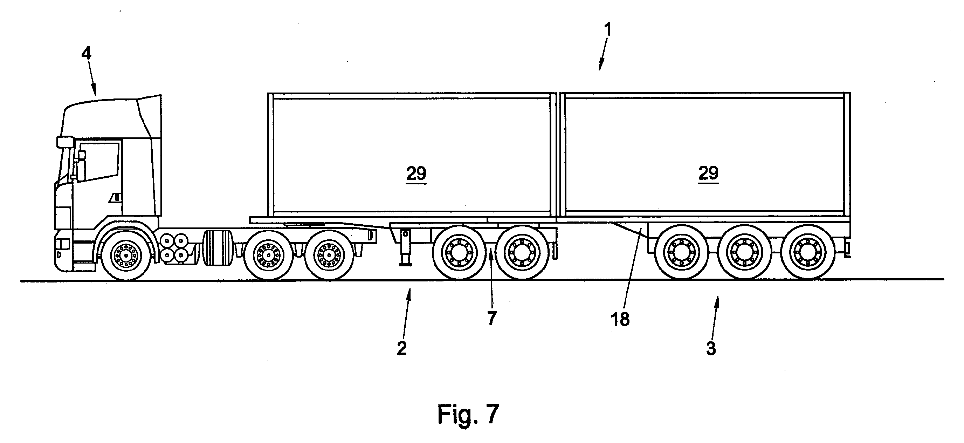

The front semi-trailer 2 and rear semi-trailer 3 are connectable in a long mutually pivotable configuration as shown in Fig. 1 and in a short, mutually rigid configuration as shown in Fig. 7. In the long configuration the frame portion 18 of the rear semi-trailer 3 is pivotably connected to the coupling chassis 7 of the front semi-trailer 2 by the coupling 6. In the short configuration, the front frame portion 18 of the rear semi-trailer 3 is rigidly connected to the support frame 14 of the front semi-trailer 2, the container support arms 20 being pivoted inwardly. The front frame portion 18 of the rear semi-trailer 3 projects between longitudinal beams of the support frame 14 of the front semi-trailer 2. The front frame coupling member 27 in this example (the kingpin), is coupled to the plate 11 and the fixation of the connection between the front semi-trailer 2 and the rear semi-trailer 3 is provided by the immobilization of the front frame portion 18 in the support frame 14. As is best seen in Figs. 6 and 21, the support frame 14 is adapted for receiving the front frame portion 18 of the rear semi-trailer 3 such that the front frame portion 18 projects in the support frame 14 of the front semi-trailer 2. The external width of the front frame portion 18 closely fits within the internal width of the support frame 14 between the longitudinal beams 53 of the support frame. Because the container support arms 20 are pivoted inwardly, the width of the front end portion of the rear semi-trailer 3 is reduced to the width 33 of the front frame portion 18. Thus, the free space in the support frame 14 required for allowing the front frame portion 18 to be inserted therein is reduced.

At least the front ones of the container support arms may, instead of being pivotable, be retractable, demountable or slidable in longitudinal direction of the semi-trailer which also allows a front end portion of the front frame portion 18 to be cleared from laterally projecting parts in the most forwardly located support positions. Furthermore, instead of two separate support arms 20 projecting on opposite sides of the front frame portion 18, a single container support beam or girder may be provided that extends over the total carrier platform width of the rear semi-trailer 3.

When retractable or inwardly pivotable container support arms are provided, the arms are preferably retractable or pivotable to a position completely within the contour of the front frame portion in frontal cross-sectional view, so that the container support arms require no additional space in the support frame 14.

As a result of the front frame portion 18 of the rear semi-trailer 3 projecting in the support frame 14 of the front semi-trailer 2 (between the longitudinal beams 53 thereof) over a distance up to and including or beyond the most forwardly located support positions where the most forwardly located container support arms 21 are located if the rear semi-trailer 3 is in the longitudinal configuration and carries a container, the length of the mobile semi-trailer combination is reduced. When the front frame 18 is also partially slid in the guide 34, the length of the mobile semi-trailer combination is further reduced. When the rear frame portion 25 is retracted in the main frame 26, the length of the mobile semi-trailer combination is reduced even further.

Prior to reconfiguration of the mobile semi-trailer combination 1 into the short configuration, a container 30 on the rear semi-trailer 3 is to be removed to allow the length of the rear semi-trailer 3 to be reduced. Adjustment of the length can be performed while the semi-trailers 2, 3 are coupled, but also in uncoupled condition. Also prior to the actual adjustment of the length to the shortened length, the container support arms 20 are pivoted inwardly into the front frame portion 18 of the rear semi-trailer 3. Next, the coupling chassis 7 of the front semi-trailer 2 is placed in the inward retracted position. This can for instance be done by blocking the wheels 8, 9 of the coupling chassis 7 and driving the truck 4 backwards, but also by pushing the chassis 7 underneath the support surface 14. The front frame 18 of the rear semi-trailer 3 is inserted into the support frame 14 of the front semi-trailer 2 and pushed partially into the guide 34 of the main frame 26 of the rear semi-trailer 3. This may be carried out by reversing the front semi-trailer 2 with the brakes of the axles 16, 17, 18 of the rear semi-trailer applied so that the rear semi-trailer is prevented from rolling backwardly. When the semi-trailers 2, 3 were uncoupled prior to displacing the coupling chassis 7, the rear semi-trailer 3 can be coupled and inserted after the coupling chassis 7 has been displaced to its retracted position. Also, the rear frame portion 25 is pushed to the retracted position. In the short configuration, the mobile semi-trailer combination has a reduced length equal to the size of two 20 ft containers 29 or one 40 or 45 ft container and is within the normal maximum length of commercial vehicles.

For reconfiguration of the mobile semi-trailer combination into the long configuration, the steps described above are carried out in reversed sense.

The adjustment of the length of the rear semi-trailer 3, the displacement of the coupling chassis 7 and the insertion of the front frame portion 18 in the support frame 14 can in principle be carried out in any order, although it is recommended that the coupling members 11, 27 of the front and rear semi-trailers are coupled before the coupling chassis 7 is moved forward and the front frame portion 18 is inserted into the support frame 14.

In another embodiment, the front semi-trailer is further provided with a bay equipped with releasable fasteners for receiving and immobilizing the front frame of the rear semi-trailer to the support frame of the front semi-trailer, so that the mobile semi-trailer combination is connectable in a short mutually rigid configuration without a connection via the coupling for articulated coupling of the front semi-trailer to the rear semi-trailer.

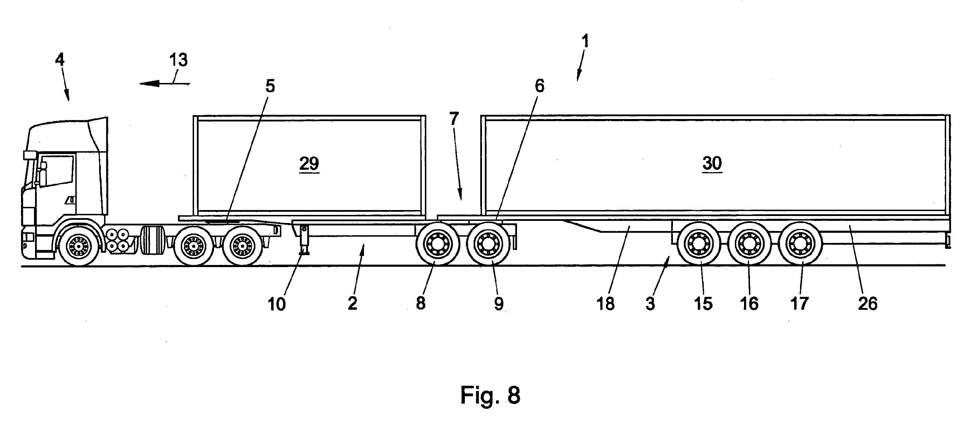

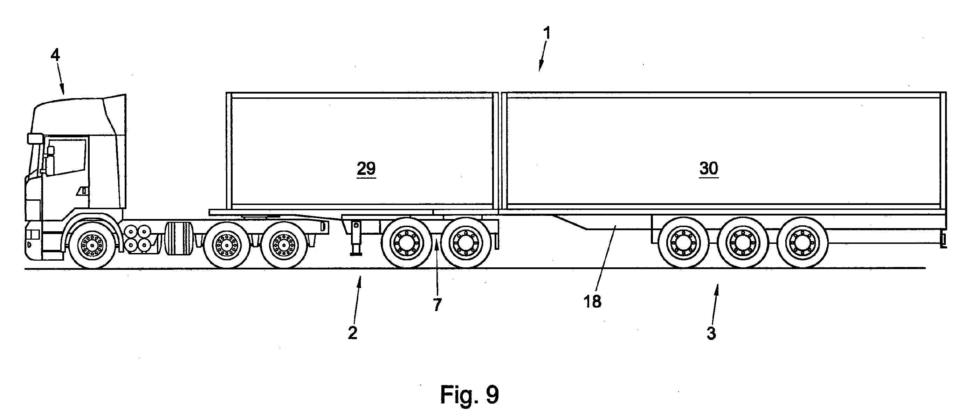

In its long configuration as shown in Fig. 1, a semi-trailer combination and the tractor coupled thereto have two points of articulation: one between the tractor and the front semi-trailer and one between the front semi-trailer and the rear semi-trailer. Driving backwards with a vehicle having such a double articulation is quite difficult. According to the present embodiment of the invention, the container can be positioned on the rear semi-trailer 3 in a position (see Figs. 8 and 9) shifted slightly backwards relative to the position shown in Fig. 1.

To this end, the most forwardly located container support arms 20 can be repositioned by dismounting and remounting in a position 20' shown in Fig. 4 in which the container locks at the distal ends of the arms 20' are positioned slightly backward from the position of the container locks if the container arms 20 are positioned in the most forward position 20. Alternatively, the repositioning of the container locks can be achieved by providing that the container arms are pivotable or slideable backwards and forwards between two operating positions for carrying a container.

If the container 30 is positioned on the rear semi-trailer 3 in the rearward position shown in Figs. 8 and 9, a front end of the frame of the rear semi-trailer 3 projects forwardly of the container 30. From the driving configuration shown in Fig. 8, the front frame end of the rear semi-trailer 3 can be inserted into the front semi-trailer 2 by reversing the front semi-trailer 2 relative to the rear semi-trailer 3 while the coupling chassis 7 of the front semi-trailer 2 is also maintained stationary, until the configuration in Fig. 9 has been reached. In the configuration shown in Fig. 9, articulation between the front semi-trailer 2 and the rear semi-trailer 3 is prevented, because the front frame end of the rears semi-trailer 3 projecting forwardly of the container 30 is guided in the rear end portion of the front semi-trailer 2.

The elimination of one of the two articulations facilitates reversing of the tractor semi-trailer combination, since the front and rear semi-trailers 2, 3 are prevented from mutual jackknifing. In the extended LHV driving configuration shown in Fig. 8, the distance between the containers 29, 30 on the front and rear semi-trailers 2, 3 is larger than in the normal LHV driving configuration shown in Fig. 1. This entails a slightly increased drag. Whether the extended driving configuration shown in Fig. 8, which, in practice, can be selected only before loading of the container 30 and which allows reversing in the configuration shown in Fig. 9, is preferable over the normal LHV configuration, will depend on the extent of maneuvering including reversing that is anticipated, the skill of the driver and the distance to be covered in LHV configuration. Also the smallest radius of bends to be negotiated along the route may affect the decision to opt for the configuration shown in Fig. 8.

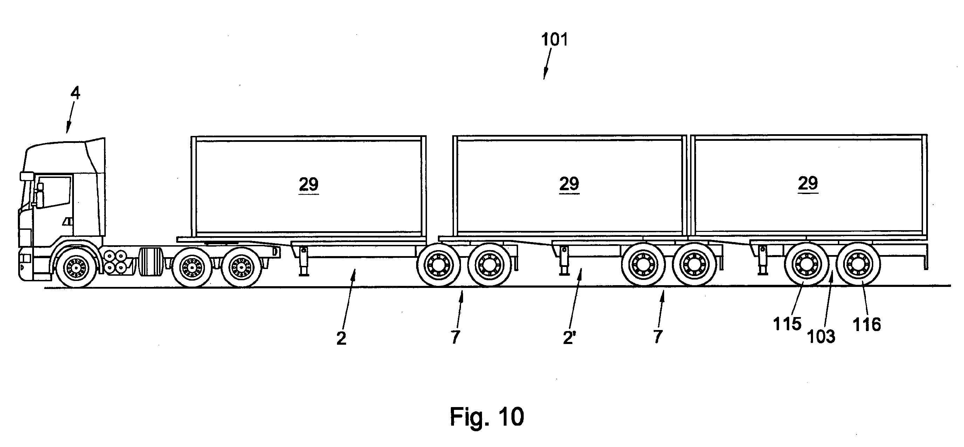

In another embodiment shown in Fig. 10, a mobile semi-trailer combination 101 is composed of two of the front type semi-trailers 2, 2' and one rear type semi-trailer 103. The two front type semi-trailers 2, 2' are coupled so as to articulatable relative to each other about the coupling between the coupling chassis 7 of the front one of the front type semi-trailers and the front end of the rear one of the front type semi-trailers 2'. The rear one of the front type semi-trailers 2' and the rear semi-trailer 103 are coupled such that articulation between these semi-trailers 2', 103 is blocked. Together, the rear one of the front type semi-trailers 2' and the rear semi-trailer 103 constitute a rear semi-trailer that can carry two TEU. Thus, the semi-trailer combination 101 is in a long LHV type configuration allowing the transportation of three TEU.

By uncoupling the rear type semi-trailer 103 carrying the rearmost 20 ft container 29, the rear doors of the middle 20 ft container 29 can be made accessible for loading and unloading.

With the coupling chassis 7 of the front one of the front type semi-trailers 2 slid forward to a position as shown in Fig. 7, the front type semi-trailers 2, 2' can be coupled to each other in a short configuration blocked against mutual articulation. With the coupling chassis 7 of the rear one of the front type semi-trailers 2' slid forward, the rear type semi-trailer 103 can be coupled to the rear one of the front type semi-trailers 2' in a short configuration with the front frame portion of the rear semi-trailer 103 inserted into the rear one of the front type semi-trailers 2', so that also mutual articulation between the rear semi-trailer 103 and the rear one of the front type semi-trailers 2 is blocked. Moreover, the rear frame portion of the rear semi-trailer 103 can be retracted in a manner similar to the rear frame portion 25 as illustrated by Figs. 4 and 5. Thus, the semi-trailer combination 101 can be brought in a normal two TEU configuration, which is allowed to circulate on most roads without special permission, without having to leave back one of the semi-trailers.

Alternatively, at a point of delivery, one of the front type semi-trailers 2 or the rear semi-trailer 103 can be uncoupled and left behind. Subsequently, the combination can for instance travel further as a conventional commercial vehicle with a two TEU cargo capacity in the short configuration, which is allowed to circulate on most roads without special permission.

Furthermore, by adding yet another front type semi-trailer 2 as the front, middle or rear one of the front type semi-trailers 2 an additional semi-trailer can be added to be transported along with the configuration having an overall length as shown in Fig. 10 and three TEU transport capacity, i.e. within standard maximum dimensions of an LHV combination.

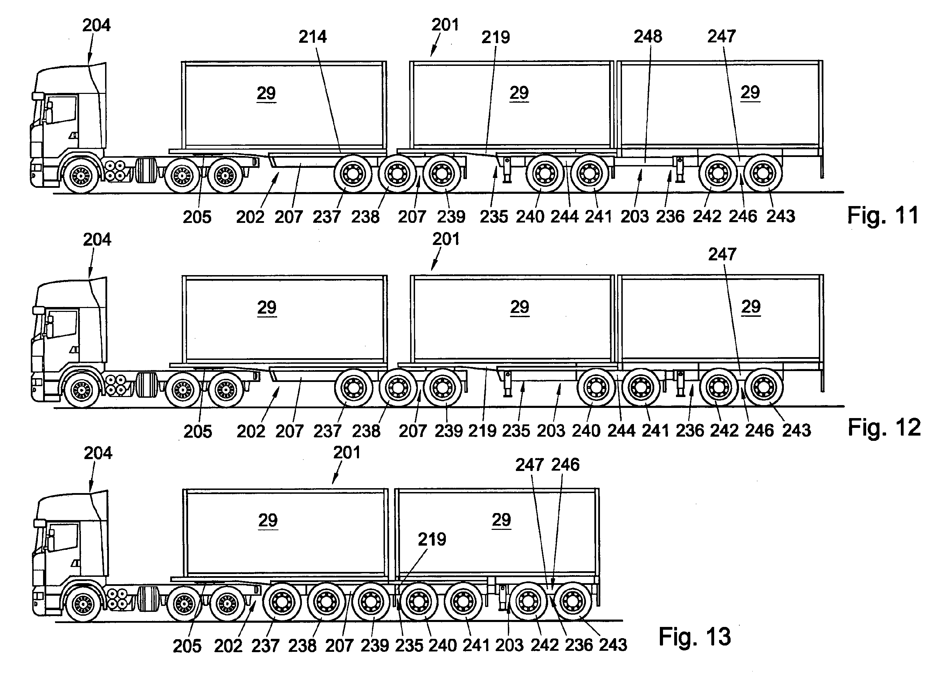

In Figs. 11-20 overall views and details of yet another example of a mobile semi-trailer combination 201 according to the invention is shown. The semi-trailer combination 201 according to this example is composed of a front semi-trailer 202 and a rear semi-trailer 203 articulated to the first semi-trailer 202 at the front of the combination 201. The rear semi-trailer is composed of a second semi-trailer 235 and a third semi-trailer 236 rigidly (in the sense of not articulatable) but detachably coupled to the second semi-trailer 235.

The semi-trailer combination 201 according to this example can be shortened from long configurations as shown in Figs. 11 and 12 to a particularly short configuration as shown in Fig. 13 including all of the three semi-trailers 202, 235 and 236 and vice versa. This allows changing between the long LZV configuration and a short configuration, which is road legal without making use of exemptions such as LZV rules, without removing or adding semi-trailers. This provides an important increase in logistic flexibility and in many cases it will be possible to carry out combined logistic transport requirements with fewer semi-trailers and a smaller overall mileage, because the need of leaving semi-trailers behind is obviated.

Additionally, also a mobile semi-trailer combination 201 according to the present example allows leaving behind semi-trailers. The three semi-trailers 202, 235 and 236 can also be disconnected so that the tractor 204 can pull only the first, the second or the third semi-trailer 202, 235 or 236, only the first and the second semi-trailers 202, 235, 236 or only the second and the third semi-trailers 235, 236. The tractor 204 is similar to the tractor 4 shown in Figs. 1, 7, 8, 9 and 10, but its kingpin-plate coupling 205 has a top surface at a lower level than the kingpin-plate coupling 5 than the tractor 4 shown in Figs. 1, 7, 8, 9 and 10. This allows the second and third semi-trailers 235, 236 to have a relatively low front end in line with the load deck and capable of being guided by a guide or guide profiles under the load deck of the semi-trailer directly in front of the second or third semi-trailer.

The first semi-trailer 202 has a wheel set including three axles 237, 238, 239. The second semi-trailer 235 has a wheel set including two axles 240, 241 and the third semi-trailer 236 has a wheel set including two axles 242, 243. The wheel sets of the semi-trailers may have different numbers of axes, depending on the load carrying requirements and the allowable axle loads.

The first semi-trailer 202 has a wheel frame 207 carried by the axles 237, 238, 239 of the first semi-trailer 202 via suspension members of those axles 237, 238, 239. The wheel frame 207 also constitutes the coupling chassis 207 of the front semi-trailer 202.

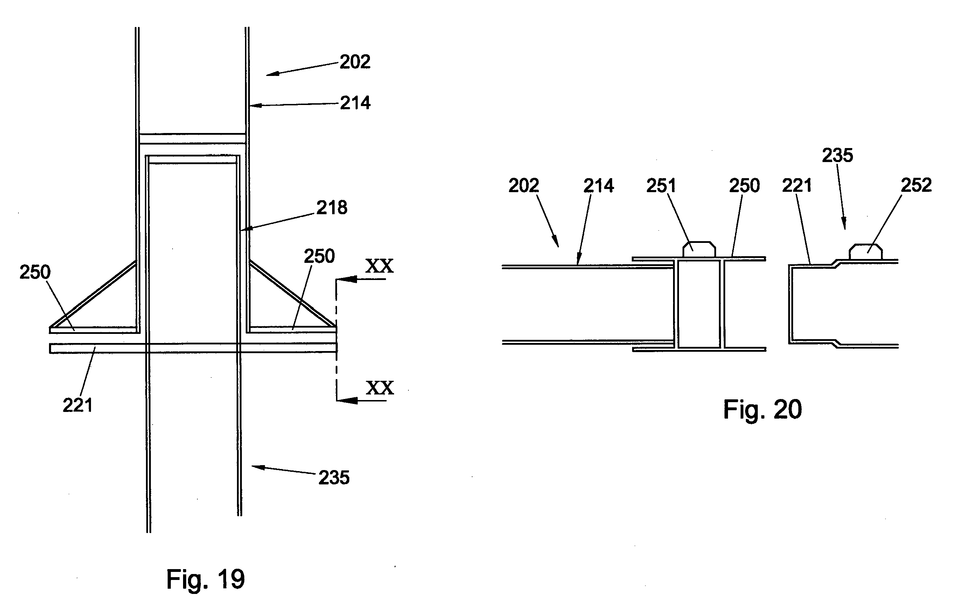

The second semi-trailer 235 has a wheel frame 244 carried by the axles 240, 241 of the second semi-trailer 235 via suspension members of those axles 240, 241. The wheel frame 244 is slidably mounted to the front frame portion 218 of the second semi-trailer 235, which front frame portion also constitutes the front frame portion of the rear semi-trailer 203 as a whole, which front frame portion 218 is insertable into the frame 214 of the first semi-trailer 202 (see Figs. 13 and 19). The front frame portion 218 includes a load support frame 219 and a coupling carrier portion 232.

The third semi-trailer has a frame 246 and front frame portion 248 slidably mounted relative to a wheel frame 247 of the third semi-trailer 236. When connected to the second semi-trailer 236, the front frame portion 248 and the wheel frame 247 coupled thereto, i.e. the third semi-trailer 236 is slidably guided relative to the second semi-trailer 235, so the second semi-trailer 235 and the third semi-trailer 236 slide relative to each other when the semi-trailer combination is converted from the long configuration to the short configuration or vice versa. In both configurations, in operating condition for driving, the second semi-trailer 235 and the third semi-trailer 236 are rigidly coupled to each other, so that these semi-trailers cannot pivot relative to each other.

The coupling carrier portion 232 of the rear semi-trailer 203 is guided by the front support frame 219 to allow movement of the carrier portion 232 of the front frame portion 218 to and fro in the driving direction relative to the front support frame 219 and the wheel frame 244 of the second semi-trailer 235, between an extended position and a retracted position. The front support frame 219 is guided relative to the wheel frame 244 of the second semi-trailer 235 to allow movement of the front support frame 219 to and fro in the driving direction relative to the wheel frame 244 of the second semi-trailer 235, between an extended position and a retracted position.

As is best seen in Figs. 13 and 16-18, in the short configuration, an overlap in longitudinal (driving) direction exists between the front frame portion 218 of the second semi-trailer 235 and the frame 246 of the third semi-trailer 236. This allows to reduce the length of the rear semi-trailer 203 (composed of the second and third semi-trailers 235 and 236) to a particularly important extent. Depending on the number of axles and the legislation on allowable vehicle length, the thus achievable shortest length provides a particularly important contribution to reducing the length of the semi-trailer combination 201 in its shortest length with all three semi-trailers 202, 235, 236 to within the limitations applicable to a regular semi-trailer combination.

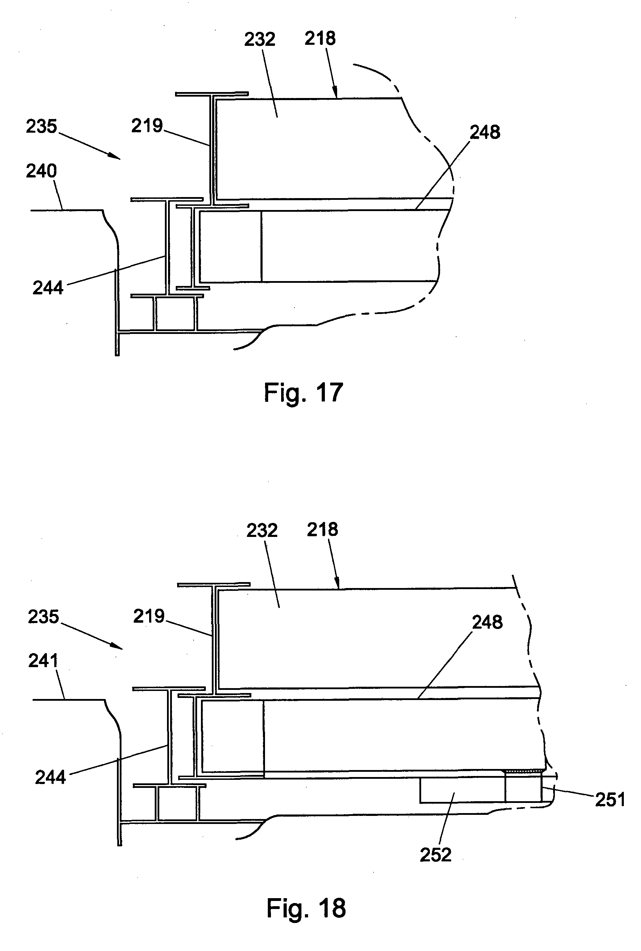

As is illustrated by Figs. 17 and 18, in the present example the overlap is made possible by providing that the front frame portion 218 of the second semi-trailer 235 extends above a portion of the frame 246 of the third semi-trailer 236. It however also possible to provide that the overlap is in the form of front frame portion of the second semi-trailer extending under and/or laterally inside or outside a portion of the frame of the third semi-trailer. The latter option is illustrated by an example of portion of a second semi-trailer 535 shown in Fig. 24 in which the guiding configuration principle shown in Fig. 21 is applied at two levels.

In this example, the support frame 519 has longitudinal beams 573 composed of a T-portion 574 having a vertically projecting flange and a box portion 55. The box portion 575 is slidably guided by a corner portion of a beam 576 of the wheel frame 544, by top surfaces of or carried by transverse beams 577. Also in this example, such an arrangement provides a direct transfer of loads from the beams 573 of the support frame 519 to the wheel frame 544 suspended by the wheels 541 and suspension members 578. The box portions 575 provide a relatively wide and, respectively, high bearing surfaces, so that loads are distributed over a relatively large area. This allows to make use of relatively simple bearing materials, such as (galvanized) steel sliding over guide blocks of polymer material such as PA, POM or PTFE. A particularly reliable guiding and resistance against blocking caused by uneven movement of the beams is achieved, because the box portions 575 are also guided by guide flanges 578 projecting from the transverse beams 577 and bounding chambers on which the box portion 575 are guided. Above these guide flanges 578 room is left free allowing the transverse connections 579 of the support frame 519 to pass in longitudinal direction.

A second instance where the same guide principle is applied is in the slideable guiding of the coupling carrier portion 532 relative to the support frame 519. A particular advantage of the present guiding principle is, that room is left for transversely extending connections 577, 579, 580 between the longitudinal beams 576, 573, 581 of each frame 544, 519, 532, which transversely extending connections 577, 579, 580 can pass by each other in longitudinal direction when the semi-trailer is telescopically lengthened or shortened. Thus, differences in longitudinal movement of the longitudinal beams of a frame, which tends to cause the beams to become stuck relative to each other, can effectively be counteracted without relying on particularly low friction bearing members which are costly and tend to be maintenance sensitive.

If a third semi-trailer is to be coupled to the second semi-trailer (general configurations as shown in Figs. 12 and 13), the wheel frame 544 is slid backward along the beams 573 of the support frame 519, so that the rear portions of the chambers guiding the box portions 575 are vacated allowing box portions of longitudinal beams of a third semi-trailer to be guided into the chambers. In this manner, the wheel frame 544 can easily be slid backward to close to the wheel frame of the third semi-trailer. The longitudinal beams of the third semi-trailer have cross-sectional profiles shaped and dimensioned corresponding to the profiles of the beams 573 and positioned corresponding to the positions of the profiles the beams 573. The longitudinal beams of the third semi-trailer are slidable relative to the wheel frame of the third semi-trailer in the same manner as the longitudinal beams 573 of the support frame 519 are guided relative the wheel frame 544. The third semi-trailer further has a rear frame 524 with longitudinal beams slidable in a chamber bounded by the profile of the wheel trailer and guide members mounted thereto as indicated by dash-and-dot lines in Fig. 24. The third trailer preferably does not have a slidable coupling carrier portion such as portion 532 in Fig. 24.

In the short configuration, the coupling carrier portion 532 of the front frame portion of the second semi-trailer may extend laterally at the inside of a front portion of the frame of the third semi-trailer. Thus, an overlap in longitudinal direction between the front frame portion of the second semi-trailer and the front portion of the frame of the third semi-trailer can be achieved which occupies little vertical space. This effect can also be achieved if (part of) the front frame portion of the second semi-trailer may extend laterally at the outside of a front portion of the frame of the third semi-trailer.

While the possibility of providing an overlap in longitudinal (driving) direction between the front frame portion 218 of the second semi-trailer 235 and the frame 246 of the third semi-trailer 236 is advantageous in combination with the previously described features that, in the short configuration, the front frame portion 218 of the rear semi-trailer 203 is rigidly (non-articulatably) coupled to the front frame portion of the front semi-trailer 202, the support arms 220 being dismounted, retracted, inwardly pivoted or slid rearwardly and the front frame portion 218 of the rear semi-trailer 203 extending into the front frame portion of the front semi-trailer 202, the feature that an overlap in longitudinal (driving) direction between the front frame portion 218 of the second semi-trailer 235 and the frame 246 of the third semi-trailer 236 can be provided is also of advantage for allowing a particularly large amount of shortening from the long configuration to the short configuration without such previously described features.

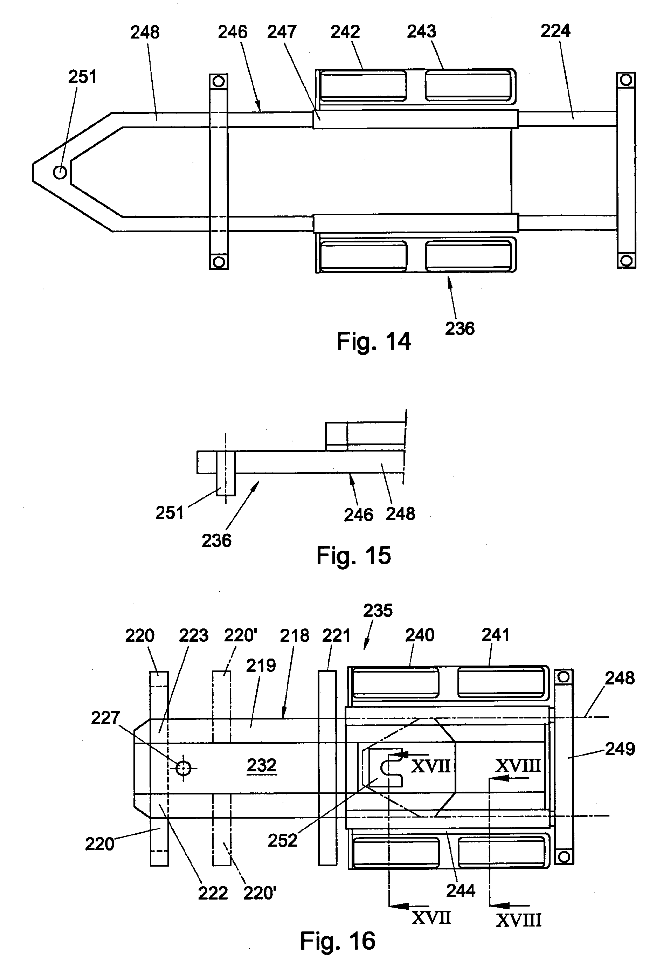

As is illustrated by Fig. 16, more specifically, an overlap exists between the front portion 248 of the frame 246 of the third semi-trailer 236 and the front frame portion 218 of the second semi-trailer 235. In Fig. 16, the front support frame 219 is shown in its most retracted position, the fixed support arms 221 being directly in front of the wheel frame 244 of the second semi-trailer 235. The coupling carrier 232 is extended and the rear support beam is retracted in a position directly to the rear of the wheel frame 244 of the second semi-trailer 235.

As is shown in Fig. 18, in coupled condition, a front frame coupling member 251 (in this example a kingpin) of the third semi-trailer 236 (see also Fig. 14) is coupled to a plate 252 of the second semi-trailer 235 (see also Fig. 16). However, instead of the example 251, 252 shown, also alternative coupling constructions allowing to catch a coupling member of one of the second and third semi-trailers into a coupling member of the third or, respectively, second semi-trailers can be provided.

As is best seen in Figs. 11 and 12, in the long configuration, the wheel frame 244 of the second semi-trailer 235 is slidably guided for guided displacement along a front portion 248 of the frame of the third semi-trailer 236. This feature allows to relocate the position of the axles 240, 241 of the second semi-trailer 235 further backward when the second semi-trailer 235 and the third semi-trailer 236 are rigidly connected to each other, to allow to position the axles 240, 241 of the second semi-trailer 235 for a more even distribution of axle loads in the event freight having a centre of gravity located relatively far to the rear of the combined semi-trailer 203 is to be transported.

While it is advantageous for the versatility of a semi-trailer combination to provide that the wheel frame 244 of the second semi-trailer 235 is slidably guided for guided displacement along a front portion 248 of the frame of the third semi-trailer 236 in combination with the previously described features that, in the short configuration, the front frame portion 218 of the rear semi-trailer 203 is rigidly (non-articulatably) coupled to the front frame portion of the front semi-trailer 202, the support arms 220 being dismounted, retracted inwardly pivoted or slid rearwardly and the front frame portion 218 of the rear semi-trailer 203 extending into the front frame portion of the front semi-trailer 202, the feature that the wheel frame 244 of the second semi-trailer 235 is slidably guided for guided displacement along a front portion 248 of the frame of the third semi-trailer 236 is also of advantage for allowing a more even axle load distribution without such previously described features.

As is best seen in Fig. 14, the frame 246 of the third semi-trailer 236 is guided in driving direction relative to the wheel frame 247 of the third semi-trailer 236 between an extended position for use in the long configuration (shown in Fig. 14) and a retracted position for use in a short configuration as shown in Fig. 13. According to the present example, the frame 246 of the third semi-trailer 236 has two beams extending in driving direction. However, also different numbers of beams can be provided, such as a central beam construction as shown in Fig. 4.

The rear frame portion 224 of the third semi-trailer 236 and the rear frame portion 249 of the second semi-trailer are also guided in driving direction relative to the associated wheel frame 247 and, respectively, 244 for displacement between an extended position for use in the long configuration (shown in Fig. 14 for the third semi-trailer 236) and a retracted position (shown in Figs. 13 and 16 for the second semi-trailer 235) for use in a short configuration. Depending on the desired or allowable lengths in the long configuration and the short configuration, extendable rear frame portions of the second and/or third semi-trailer may be omitted.

Where successive ones of the semi-trailers are non-articulatably coupled to each other, rotational movement about a longitudinal axis in driving direction of the coupled semi-trailers relative to each other is disadvantageous because of loads exerted on the parts that are slidingly coupled to each other and associated wear caused thereby. As is shown in Figs. 19 and 20, non-articulatably coupled semi-trailers 202 and 235, when non-articulatably coupled to each other, have horizontal cross-beams 221, 250 perpendicular to the driving direction on the ends of the coupled semi-trailers 202, 235 facing each other that are coupled directly to each other. In the present example this direct coupling is a form-locked engagement in which part of the front cross beam 221 of the second semi-trailer 235 is received in a recess in the rear cross-beams 250 of the first-semi-trailer 202. Alternatively, part of the rear cross beam of the first semi-trailer could be received in a recess in the front cross-beams of the second-semi-trailer. Preferably, the mutual engagement preventing vertical movement of the cross beams 221, 250 relative to each other extends to positions close (preferably less than 10% of the trailer width) away from the extreme lateral ends of the trailers. In the example shown in Figs. 19 and 20, the cross-beams 221, 250 are provided with twist locks 252, 252 for engaging standard freight containers positioned thereon. However, the mutual engagement between the directly coupled cross-beams may also be achieved in another manner for example by complementary shaped projections and recesses on and, respectively, in opposing faces of the cross-beams that are to be fixedly coupled relative to each other.

Thus, a large variety of configurations within LHV and standard maximum dimensions is allowed by the insertability of the front frame portion of the rear semi-trailer into a front type semi-trailer in combination with the ability to shift the position of the coupling chassis of each front type semi-trailer in longitudinal direction and adjustability of the distance over which the front and rear portions of the rear semi-trailer project from the wheel set. This large variety of configurations allows a particularly large flexibility in logistic planning of road transport including circulation over some roads in LHV mode and circulation over roads where circulation is allowed in standard mode only.

While the invention has been illustrated and described in detail in the drawing and foregoing description, such illustration and description are to be considered illustrative or exemplary and not restrictive; the invention is not limited to the disclosed embodiments. For example instead of couplings of the kingpin-plate type, other suitable types of coupling can be implemented. Furthermore, the number of wheel axes of each of the semi-trailers, may be larger or smaller and/or the position of the wheel frame of a second semi-trailer may be restricted to a position or positions coupled to a frame of that semi-trailer only. Furthermore, where transportation of a 40 ft container or two 20 ft containers directly adjacent each other is described, it is generally also possible to transport a 45 ft container within the applicable maximum length according to standard or LHV regulations. Alternatively, single or double module swap bodies specifically designed for road transport can be transported. Typical standard modular lengths of such swap bodies are 7.15 m, 7.45 m and 7.82 m.

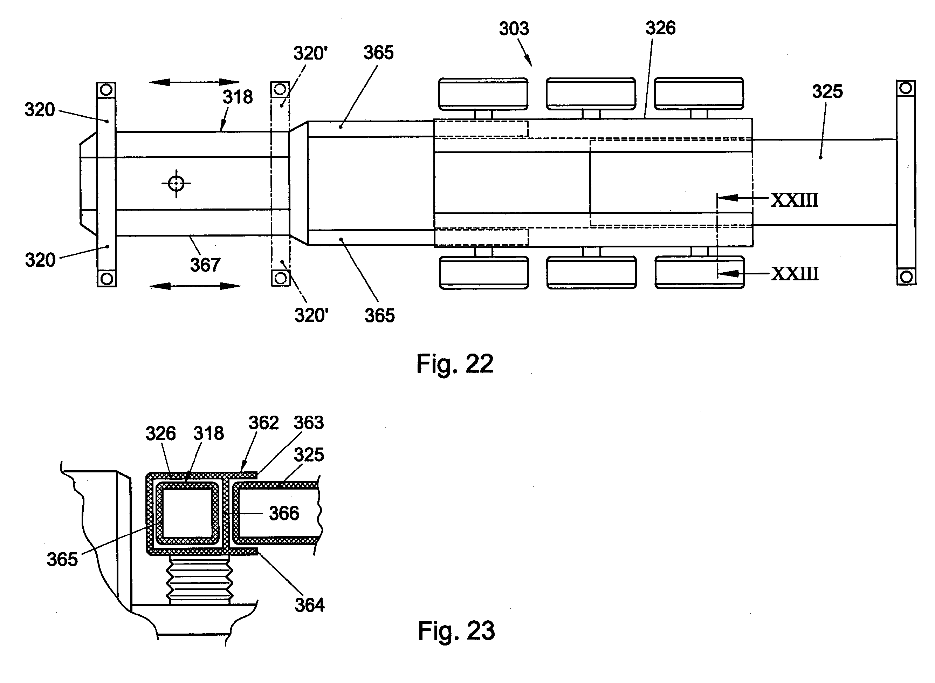

As is illustrated by an alternative example of a rear semi-trailer 303, shown in Figs. 22 and 23 in its long configuration, the main frame 326 may have beams 362 that are arranged for guiding both the front frame portion 318 and the slideable rear frame portion 325. Thus, a light construction and simple can be achieved because no separate parts are required for guiding the front frame portion 318 and the slideable rear frame portion 325 and load transfer via the beams 362 to the suspension is very direct, which is advantageous for achieving good driving stability.

The front frame portion 318 has longitudinal beams 365 that are telescopically guided in chambers in the longitudinal beams 362 of the main frame 326 of the rear semi-trailer 3. Furthermore, the longitudinal beams 362 of the main frame 326 have flanges 363, 364 that project towards the respective longitudinal beams 362 on the opposite side of the rear semi-trailer 3. Together with a vertical wall portion 366 bounding the chamber for guiding the beams 365, the flanges 363, 364 bound horizontally open U-shaped guide tracks of which the open sides are facing each other and that are positioned and dimensioned for guiding the slideable rear frame portion 325.

In the present example, the slideable rear frame portion 325 projects between end portions of the beams 365 of the front frame portion 318 when the rear semi-trailer 303 is in the short configuration. This allows the arrangement of the main frame 326 and the telescopically guided front and rear frame portions 318, 325 to be of a flat construction occupying little vertical space, in particular if, as in the present example, the slideable rear frame portion 325 and the beams 365 are at generally the same level.

In the present example, the front container support arms 320, are constituted by free end portions of a transverse beam and can be slid along a gooseneck part 367 of the front frame portion 318 between a forward support position 320 (shown if full lines) for carrying a container when in the long configuration and a rearward position 320' (shown in das-and-dot lines) allowing the gooseneck part 367 of the front frame portion 318 to be inserted in the frame of the front semi-trailer beyond the support position 320.

Other variations to the disclosed embodiments can be understood and effected by those skilled in the art in practicing the claimed invention, from a study of the drawings, the disclosure, and the appended claims.

## Claims

1. A mobile semi-trailer combination, comprising:
a front semi-trailer (2; 202) having a support frame (14) and, at a rear end, a coupling chassis (7; 207) provided with a coupling member (11); and
a rear semi-trailer (3; 2', 103; 203; 303) having a set of wheels (15, 16, 17; 115, 116; 240, 241, 242, 243), a front frame portion (18; 218; 318) extending forwardly of the set of wheels (15, 16, 17; 115, 116; 240, 241, 242, 243) in a driving direction (13) having a coupling member (27; 227) complementary to the coupling member (11) of the coupling chassis (7; 207),
wherein the front and rear semi-trailers (2, 3; 2', 103; 202, 203; 303) are connectable in a long, mutually pivotable configuration and in a short, mutually rigid configuration;
wherein in the long configuration the coupling member (27; 227) of the front frame portion (18; 218; 318) of the rear semi-trailer (3; 2', 103; 203; 303) is pivotably coupled with the coupling member (11) of the coupling chassis (7; 207) of the front semi-trailer (2; 202); and
wherein in the short configuration the front frame portion (18; 218; 318) of the rear semi-trailer (3; 2', 103; 203; 303) is rigidly coupled with the support frame (14; 214) of the front semi-trailer (2; 202); **characterised in that** the rear semi-trailer has container support arms (20; 220) projecting laterally of the front frame portion (18; 218; 318), which are demountable, retractable, inwardly pivotable, or rearwardly slidable from a support position, wherein in the said shore configuration said container support arms (20; 220; 320) are demounted, retracted, inwardly pivoted or rearwardly slid from the support position, and the front frame portion (18; 218; 318) of the rear semi-trailer (3; 2', 103; 203; 303) projects into the support frame (14; 214) of the front semi-trailer (2; 202).

2. A semi-trailer combination according to claim 1,
wherein the rear semi-trailer (203) is composed of a second semi-trailer (235; 636) having a wheel frame (244) and a third semi-trailer (236) having a frame (246),
wherein the front frame portion (218; 318) of the rear semi-trailer (203; 303) is part of the second semi-trailer (236; 535) and is slidable in driving direction relative to the wheel frame (244) of the second semi-trailer (285; 635) between an extended and a retracted position,
wherein the third semi-trailer (236) is rigidly coupled to the second semi-trailer (236; 535) in a slidably guided manner, for sliding of the third semi-trailer (236) and the second semi-trailer (235; 535) relative to each other upon transition from the long to the short configuration and vice versa, and
wherein, in the short configuration, an overlap in longitudinal direction exists between the front frame portion (218) of the second semi-trailer (235; 535) and the frame (246) of the third semi-trailer (236).

3. A semi-trailer combination according to claim 1 or 2,
wherein the rear semi-trailer (203) is composed of a second semi-trailer (235; 535) having a wheel frame (244; 644) and a third semi-trailer (236) having a frame (246),
wherein the third semi-trailer (236) is rigidly and detachably coupled to the second semi-trailer (235; 535), and
wherein, in the long configuration, the wheel frame (244; 544) of the second semi-trailer (235; 535) is slidably guided by at least a portion of the frame (246) of the third semi-trailer (236).

4. A semi-trailer combination according to claim 2 or 3, wherein the frame (246) of the third semi-trailer (236) comprises a wheel frame (247) and a front frame portion (248), which front frame portion (248) is slidable in driving direction relative to the wheel frame (247) of the third semi-trailer (236) between an extended and a retracted position.

5. A semi-trailer combination according to claim 4, wherein at least the frame of the second semi-trailer (235; 535) or the frame (246) of the third semi-trailer (236) comprises a rear frame portion (249, 224; 524) which is slidable in driving direction relative to the wheel frame (244, 247) of said semi-trailer (235; 535, 236) between an extended and a retracted position.

6. A semi-trailer combination according to any one of the preceding claims, wherein said container support arms (20; 220; 320) are retractable or inwardly pivotable to within the front frame portion (18; 218; 318) of the rear semi-trailer (3; 2', 103; 208; 303).

7. A semi-trailer combination according to any one of the preceding claims, wherein said container support arms (20; 220; 320) arc part of a container support frame (19; 219; 519) of the front frame portion (18; 218; 318) of the rear semi-trailer (3; 2', 103; 203; 303) in a position adjustable in driving direction relative to a coupling carrier portion (32; 232) of the front frame portion (18; 218; 318) of the rear semi-trailer (3; 2', 103; 208; 303).

8. A semi-trailer combination according to any one of the preceding claims, wherein said container support arms (20; 220; 820) in mounted, projected or outwardly pivoted position extend over a width equal to the width of the support frame (14) of the front semi-trailer (2; 202).

9. A semi-trailer combination according to any one of the preceding claims, wherein, in the long configuration, at least most forwardly located ones of the container support arms (20; 220; 320) in most forwardly located support positions are situated laterally beside the front frame portion (18; 218; 318) and wherein, in the short configuration, the front frame part (18; 218; 318) of the rear semi-trailer (3; 2', 103; 203; 303) projects up to and including or beyond said Most forwardly located support positions into the support frame (14; 214) of the front semi-trailer (2; 202).

10. A method for reconfiguring a semi-trailer assembly, comprising:
providing a mobile semi-trailer combination (1; 101; 201) according to any one of the preceding claims;
for configuring a short configuration, starting from the long configuration:
displacing the coupling chassis (7; 207) to the retracted position;
demounting, retracting, inwardly pivoting or rearwardly sliding said container support arms (20; 220; 320); and
coupling the rear semi-trailer (3; 2', 103; 203; 303) to the front semi-trailer (2; 202), whereby the front frame portion (18; 218; 318) of the rear semi-trailer (3; 2', 103; 203; 303) is at least partly inserted forwardly into the support frame (14) of the front semi-trailer (2; 202); or
for configuring a long configuration, starting from the short configuration:
displacing the coupling chassis (7; 207) to the extended position;
mounting, extending, outwardly pivoting or forwardly sliding said container support arms (20; 220; 320) for supporting a container (29; 30); and
coupling the coupling (27; 227) of rear semi-trailer (3; 2', 103; 203; 303) to the coupling (6) of front semi-trailer (2; 202) on the coupling chassis (7; 227).

11. A method according to claim 10, further comprising uncoupling the rear semi-trailer (3; 2', 103; 203; 303) from the front semi-trailer (2; 202) prior to displacing the coupling chassis (7; 207).

12. A method according to claim 10 or 11, wherein, for configuring a short configuration, displacing the coupling chassis (7; 207) to the retracted position is done after coupling the rear semi-trailer (3; 2', 103; 203; 303) to the front semi-trailer (2; 202).

## Patentansprüche

1. Mobile Sattelauflieger-Kombination, die Folgendes umfasst:
einen vorderen Sattelauflieger (2; 202), der einen Stützrahmen (14) und, an einem hinteren Ende, ein Kupplungsfahrgestell (7; 207), das mit einem Kupplungselement (11) versehen ist, hat, und
einen hinteren Sattelauflieger (3; 2', 103; 203; 303), der einen Satz von Rädern (15, 16, 17; 115, 116; 240, 241, 242, 243), einen sich von dem Satz von Rädern (15, 16, 17; 115, 116; 240, 241, 242, 243) nach vorn in einer Fahrtrichtung (13) erstreckenden vorderen Rahmenabschnitt (18; 118; 218), der ein Kupplungselement (27; 227), komplementär zu dem Kupplungselement (11) des Kupplungsfahrgestells (7; 207), hat,
wobei der vordere und der hintere Sattelauflieger (2, 2; 2', 103; 202, 203; 303) in einer langen, wechselseitig schwenkbaren Konfiguration und in einer kurzen, wechselseitig starren Konfiguration verbunden werden können,
wobei in der langen Konfiguration das Kupplungselement (27; 227) des vorderen Rahmenabschnitts (18; 218; 318) des hinteren Sattelaufliegers (3; 2', 103; 203; 303) schwenkbar mit dem Kupplungselement (11) des Kupplungsfahrgestells (7; 207) des vorderen Sattelaufliegers (2; 202) verbunden ist, und
wobei in der kurzen Konfiguration der vordere Rahmenabschnitt (18; 218; 318) des hinteren Sattelaufliegers (3; 2', 103; 203; 303) starr mit dem Stützrahmen (14; 214) des vorderen Sattelaufliegers (2; 202) gekuppelt ist, **dadurch gekennzeichnet, dass** der hintere Sattelauflieger seitlich von dem vorderen Rahmenabschnitt (18; 218; 318) vorspringende Containerstützarme (20; 220) hat, die aus einer Stützstellung abnehmbar, einziehbar, nach innen schwenkbar oder nach hinten verschiebbar sind, wobei in der kurzen Konfiguration die Containerstützarme (20; 220; 320) aus der Stützstellung abgenommen, eingezogen, nach innen geschwenkt oder nach hinten verschoben sind und der vordere Rahmenabschnitt (18; 218; 318) des hinteren Sattelaufliegers (3; 2', 103; 203; 303) in den Stützrahmen (14; 214) des vorderen Sattelaufliegers (2; 202) vorspringt.

2. Sattelauflieger-Kombination nach Anspruch 1,
wobei der hintere Sattelauflieger (203) aus einem zweiten Sattelauflieger (235; 535), der einen Radrahmen (244) hat, und einem dritten Sattelauflieger (236), der einen Rahmen (246) hat, besteht,
wobei der vordere Rahmenabschnitt (218; 318) des hinteren Sattelaufliegers (203; 303) ein Teil des zweiten Sattelaufliegers (235; 535) ist und in Fahrtrichtung im Verhältnis zu dem Radrahmen (244) des zweiten Sattelaufliegers (235; 535) zwischen einer ausgefahrenen und einer eingezogenen Stellung verschiebbar ist,
wobei der dritte Sattelauflieger (236) auf eine verschiebbar geführte Weise starr an den zweiten Sattelauflieger (235; 535) gekuppelt ist, um den dritten Sattelauflieger (236) und den zweiten Sattelauflieger (235; 535) auf einen Übergang von der langen zu der kurzen Konfiguration und umgekehrt im Verhältnis zueinander zu verschieben, und
wobei, in der kurzen Konfiguration, eine Überlappung in der Längsrichtung zwischen dem vorderen Rahmenabschnitt (218) des zweiten Sattelaufliegers (235; 535) und dem Rahmen (246) des dritten Sattelaufliegers (236) vorhanden ist.

3. Sattelauflieger-Kombination nach Anspruch 1 oder 2,
wobei der hintere Sattelauflieger (203) aus einem zweiten Sattelauflieger (235; 535), der einen Radrahmen (244; 544) hat, und einem dritten Sattelauflieger (236), der einen Rahmen (246) hat, besteht,
wobei der dritte Sattelauflieger (236) starr und abnehmbar an den zweiten Sattelauflieger (235; 535) gekuppelt ist, und
wobei, in der langen Konfiguration, der Radrahmen (244; 544) des zweiten Sattelaufliegers (235; 535) durch wenigstens einen Abschnitt des Rahmens (246) des dritten Sattelaufliegers (236) verschiebbar geführt wird.

4. Sattelauflieger-Kombination nach Anspruch 2 oder 3, wobei der Rahmen (246) des dritten Sattelaufliegers (236) einen Radrahmen (247) und einen vorderen Rahmenabschnitt (248) umfasst, wobei der vordere Rahmenabschnitt (248) in Fahrtrichtung im Verhältnis zu dem Radrahmen (247) des dritten Sattelaufliegers (236) zwischen einer ausgefahrenen und einer eingezogenen Stellung verschiebbar ist.

5. Sattelauflieger-Kombination nach Anspruch 4, wobei wenigstens der Rahmen des zweiten Sattelaufliegers (235; 535) oder der Rahmen (246) des dritten Sattelaufliegers (236) einen hinteren Rahmenabschnitt (249, 224; 524) umfasst, der in Fahrtrichtung im Verhältnis zu dem Radrahmen (244, 247) des Sattelaufliegers (235; 535, 236) zwischen einer ausgefahrenen und einer eingezogenen Stellung verschiebbar ist.

6. Sattelauflieger-Kombination nach einem der vorhergehenden Ansprüche, wobei die Containerstützarme (20; 220; 320) nach innerhalb des vorderen Rahmenabschnitts (18; 218; 318) des hinteren Sattelaufliegers (3; 2', 103; 203; 303) einziehbar oder nach innen schwenkbar sind.

7. Sattelauflieger-Kombination nach einem der vorhergehenden Ansprüche, wobei Containerstützarme (20; 220; 320) Teil eines Containerstützrahmens (19; 219; 519) des vorderen Rahmenabschnitts (18; 218; 318) des hinteren Sattelaufliegers (3; 2', 103; 203; 303) sind, in einer in Fahrtrichtung im Verhältnis zu einem Kupplungsträgerabschnitt (32; 232) des vorderen Rahmenabschnitts (18; 218; 318) des hinteren Sattelaufliegers (3; 2', 103; 203; 303) einstellbaren Stellung.

8. Sattelauflieger-Kombination nach einem der vorhergehenden Ansprüche, wobei sich die Containerstützarme (20; 220; 320) in angebrachter, vorgeschobener oder nach außen geschwenkter Stellung über eine Breite erstrecken, die der Breite des Stützrahmens (14) des vorderen Sattelaufliegers (2; 202) gleich ist.

9. Sattelauflieger-Kombination nach einem der vorhergehenden Ansprüche, wobei, in der langen Konfiguration, wenigstens die am weitesten vorn angeordneten der Containerstützarme (20; 220; 320) in den am weitesten vorn angeordneten Stützstellungen seitlich neben dem vorderen Rahmenabschnitt (18; 218; 318) angeordnet sind und wobei, in der kurzen Konfiguration, der vordere Rahmenabschnitt (18; 218; 318) des hinteren Sattelaufliegers (3; 2', 103; 203; 303) bis zu den am weitesten vorn angeordneten Stützstellungen und dieselben einschließend oder darüber hinaus in den Stützrahmen (14; 214) des vorderen Sattelaufliegers (2; 202) vorspringt.

10. Verfahren zum Neukonfigurieren einer Sattelauflieger-Baugruppe, das Folgendes umfasst:
das Bereitstellen einer mobilen Sattelauflieger-Kombination (1; 101; 201) nach einem der vorhergehenden Ansprüche und,
zum Konfigurieren einer kurzen Konfiguration, beginnend von der langen Konfiguration:
das Verschieben des Kupplungsfahrgestells (7; 207) zu der eingezogenen Stellung,
das Demontieren, Einziehen, Nach-Innen-Schwenken oder Nach-Hinten-Schieben der Containerstützarme (20; 220; 320) und
das Kuppeln des hinteren Sattelaufliegers (3; 2', 103; 203; 303) an den vorderen Sattelauflieger (2; 202), wodurch der vordere Rahmenabschnitt (18; 218; 318) des hinteren Sattelaufliegers (3; 2', 103; 203; 303) wenigstens teilweise nach vorn in den Stützrahmen (14) des vorderen Sattelaufliegers (2; 202) eingefügt wird, oder
zum Konfigurieren einer langen Konfiguration, beginnend von der kurzen Konfiguration:
das Verschieben des Kupplungsfahrgestells (7; 207) zu der ausgefahrenen Stellung,
das Anbringen, Ausfahren, Nach-Außen-Schwenken oder Nach-Vorn-Schieben der Containerstützarme (20; 220; 320) zum Stützen eines Containers und
das Kuppeln der Kupplung (27; 227) des hinteren Sattelaufliegers (3; 2', 103; 203; 303) an die Kupplung (6) des vorderen Sattelaufliegers (2; 202) an dem Kupplungsfahrgestell (7; 227).

11. Verfahren nach Anspruch 10, das ferner das Abkuppeln des hinteren Sattelaufliegers (3; 2', 103; 203; 303) von dem vorderen Sattelauflieger (2; 202) vor dem Verschieben des Kupplungsfahrgestells (7; 207) umfasst.

12. Verfahren nach Anspruch 10 oder 11, wobei, zum Konfigurieren einer kurzen Konfiguration, das Verschieben des Kupplungsfahrgestells (7; 207) zu der eingezogenen Stellung nach dem Kuppeln des hinteren Sattelaufliegers (3; 2', 103; 203; 303) an den vorderen Sattelauflieger (2; 202) vorgenommen wird.

## Revendications

1. Combinaison de semi-remorque mobile, comprenant :
une semi-remorque avant (2 ; 202) ayant un châssis avant (14) et, à une extrémité arrière, un châssis de couplage (7 ; 207) pourvu d'un élément de couplage (11) ; et
une semi-remorque arrière (3 ; 2', 103 ; 203 ; 303) ayant un jeu de roues (15, 16, 17 ; 115, 116 ; 240, 241, 242, 243), une portion de châssis avant (18 ; 218 ; 318) s'étendant à l'avant du jeu de roues (15, 16, 17 ; 115, 116 ; 240, 241, 242, 243) dans une direction de conduite (13) ayant un élément de couplage (27 ; 227) complémentaire à l'élément de couplage (11) du châssis de couplage (7 ; 207),
dans laquelle les semi-remorques avant et arrière (2, 3, 2', 103 ; 202, 203 ; 303) sont raccordables en une configuration longue, mutuellement pivotante et en une configuration courte, mutuellement rigide ;
dans laquelle dans la configuration longue l'élément de couplage (27 ; 227) de la portion de châssis avant (18 ; 218 ; 318) de la semi-remorque arrière (3, 2', 103 ; 203 ; 303) est couplé de manière pivotante avec l'élément de couplage (11) du châssis de couplage (7 ; 207) de la semi-remorque avant (2 ; 202) ; et
dans laquelle dans la configuration courte la portion de châssis avant (18 ; 218 ; 318) de la semi-remorque arrière (3, 2', 103 ; 203 ; 303) est couplée rigidement au châssis de support (14 ; 214) de la semi-remorque avant (2 ; 202), **caractérisé en ce que** la semi-remorque arrière a des bras de support de conteneur (20 ; 220) se projetant latéralement de la portion de châssis avant (18 ; 218 ; 318), qui sont démontables, rétractables, pivotables vers l'intérieur ou coulissables vers l'arrière à partir d'une position de support, dans laquelle dans ladite configuration courte lesdits bras de support de conteneur (20 ; 220 ; 320) sont démontés, rétractés, pivotés vers l'intérieur ou coulissés vers l'arrière à partir de la position de support, et la portion de châssis avant (18 ; 218 ; 318) de la semi-remorque arrière (3, 2', 103 ; 203 ; 303) se projette dans le châssis de support (14 ; 214) de la semi-remorque avant (2 ; 202).

2. Combinaison de semi-remorque selon la revendication 1,
dans laquelle la semi-remorque arrière (203) est composée d'une seconde semi-remorque (235 ; 535) ayant un châssis de roue (244) et une troisième semi-remorque (236) ayant un châssis (246),
dans laquelle la portion de châssis avant (218 ; 318) de la semi-remorque arrière (208 ; 303) fait partie de la seconde semi-remorque (235 ; 535) et est coulissable dans la direction de conduite par rapport au châssis de roue (244) de la seconde semi-remorque (235 ; 535) entre une position déployée et une position rétractée,
dans laquelle la troisième semi-remorque (236) est couplée rigidement à la seconde semi-remorque (235 ; 535) d'une manière guidée par coulissement, pour coulisser la troisième semi-remorque (236) et la seconde semi-remorque (235 ; 535) l'une par rapport à l'autre lors d'une transition de la configuration longue à la configuration courte et vice versa et dans laquelle, dans la configuration courte, un chevauchement dans la direction longitudinale existe entre la portion de châssis avant (218) de la seconde semi-remorque (235 ; 535) et le châssis (246) de la troisième semi-remorque (236).

3. Combinaison de semi-remorque selon les revendications 1 ou 2,
dans laquelle la semi-remorque arrière (203) est composée d'une seconde semi-remorque (235 ; 535) ayant un châssis de roue (244 ; 544) et une troisième semi-remorque (236) ayant un châssis (246),
dans laquelle la troisième semi-remorque (236) est couplée rigidement et amoviblement à la seconde semi-remorque (235 ; 535) et
dans laquelle, dans la configuration longue, le châssis de roue (244 ; 544) de la seconde semi-remorque (235 ; 535) est guidé par coulissement par au moins une portion du châssis (246) de la troisième semi-remorque (236).

4. Combinaison de semi-remorque selon les revendications 2 ou 3, dans laquelle le châssis (246) de la troisième semi-remorque (236) comprend un châssis de roue (247) et une portion de châssis avant (248), laquelle portion de châssis avant (248) est coulissable dans la direction de conduite par rapport au châssis de roue (247) de la troisième semi-remorque (236) entre une position déployée et une position rétractée.

5. Combinaison de semi-remorque selon la revendication 4, dans laquelle au moins le châssis de la seconde semi-remorque (235 ; 535) ou le châssis (246) de la troisième semi-remorque (236) comprend une portion de châssis arrière (249 ; 224 ; 524) qui est coulissable dans la direction de conduite par rapport au châssis de roue (244, 247) de ladite semi-remorque (235 ; 535, 236) entre une position déployée et une position rétractée.

6. Combinaison de semi-remorque selon une quelconque des revendications précédentes, dans laquelle lesdits bras de support de conteneur (20 ; 220 ; 320) sont rétractables ou pivotables vers l'intérieur à l'intérieur de la portion de châssis avant (18 ; 218 ; 318) de la semi-remorque arrière (3 ; 2' ; 103 ; 203 ; 303).

7. Combinaison de semi-remorque selon une quelconque des revendications précédentes, dans laquelle lesdits bras de support de conteneur (20 ; 220 ; 320) font partie d'un châssis de support de conteneur (19 ; 219 ; 519) de la portion de châssis avant (18 ; 218 ; 318) de la semi-remorque arrière (3 ; 2', 103 ; 203 ; 303) dans une position ajustable dans la direction de conduite par rapport à une portion porteuse de couplage (32 ; 232) de la portion de châssis avant (18 ; 218 ; 318) de la semi-remorque arrière (3 ; 2', 103 ; 203 ; 303).

8. Combinaison de semi-remorque selon une quelconque des revendications précédentes, dans lequel lesdits bras de support de conteneur (20 ; 220 ; 320) dans la position montée, projetée ou pivotée vers l'arrière s'étendent sur une largeur égale à la largeur du châssis de support (14) de la semi-remorque avant (2 ; 202).

9. Combinaison de semi-remorque selon une quelconque des revendications précédentes, dans lequel, dans la configuration longue, au moins les bras situés le plus à l'avant des bras de support de conteneur (20 ; 220 ; 320) dans les positions de support situées les plus à l'avant sont situés latéralement à côté de la portion de châssis avant (18 ; 218 ; 318) et dans lequel, dans la configuration courte, la partie de châssis avant (18 ; 218 ; 318) de la semi-remorque arrière (3 ; 2', 103 ; 203 ; 303) se projette vers le haut et incluant ou au-delà desdites positions de support situées le plus à l'avant dans le châssis de support (14 ; 214) de la semi-remorque avant (2 ; 202).

10. Procédé de reconfiguration d'un ensemble de semi-remorque, comprenant de :
fournir une combinaison de semi-remorque mobile (1 ; 101 ; 201) selon une quelconque des revendications précédentes ;
pour configurer une configuration courte, démarrer de la configuration longue :
déplacer le châssis de couplage (7 ; 207) en la position rétractée ;
démonter, rétracter, pivoter vers l'intérieur ou coulisser vers l'arrière lesdits bras de support de conteneur (20 ; 220 ; 320) ; et
coupler la semi-remorque arrière (3 ; 2', 103 ; 203 ; 303) à la semi-remorque avant (2 ; 202), moyennant quoi la portion de châssis avant (18 ; 218 ; 318) de la semi-remorque arrière (3 ; 2', 103 ; 203 ; 303) est au moins partiellement insérée à l'avant dans le châssis de support (14) de la semi-remorque avant (2 ; 202) ; ou
pour configurer une configuration longue, démarrer de la configuration courte :
déplacer le châssis de couplage (7 ; 207) en la position déployée ;
monter, étendre, pivoter vers l'extérieur ou coulisser vers l'avant lesdits bras de support de conteneur (20 ; 220 ; 320) pour supporter un conteneur (29 ; 30) ; et
coupler le couplage (27 ; 227) de la semi-remorque arrière (3 ; 2', 103 ; 203 ; 303) au couplage (6) de la semi-remorque avant (2 ; 202) sur le châssis de couplage (7 ; 227).

11. Procédé selon la revendication 10, comprenant en outre de découpler la semi-remorque arrière (3 ; 2', 103 ; 203 ; 303) de la semi-remorque avant (2 ; 202) avant de déplacer le châssis de couplage (7 ; 207).

12. Procédé selon les revendications 10 ou 11, dans lequel, pour configurer une configuration courte, le déplacement du châssis de couplage (7 ; 207) en la position rétractée est fait après le couplage de la semi-remorque arrière (3 ; 2', 103 ; 203 ; 303) à la semi-remorque avant (2 ; 202).
